(19)

Europäisches
Patentamt
European
Patent Office
Office européen
des brevets

(11) **EP 4 325 317 B1**

(12) **EUROPEAN PATENT SPECIFICATION**

(45) Date of publication and mention
of the grant of the patent:
**11.09.2024 Bulletin 2024/37**

(21) Application number: **22190589.6**

(22) Date of filing: **16.08.2022**

(51) International Patent Classification (IPC):
**G05D 1/246** *(2024.01)* **G05D 1/00** *(2024.01)*
**B60W 30/00** *(2006.01)* **G01C 21/00** *(2006.01)*

(52) Cooperative Patent Classification (CPC):
**G01C 21/20; B60W 40/06; B60W 60/001;**
**G05D 1/242; G05D 1/2464;** B60W 2554/20;
B60W 2554/801; B60W 2554/802; B60W 2554/806;
B60W 2556/50; G05D 2107/70; G05D 2109/10

(54) **AUTONOMOUS VEHICLE CONTROL GUIDED BY OCCUPANCY SCORES**

DURCH BELEGUNGSZAHLEN GEFÜHRTE AUTONOME FAHRZEUGSTEUERUNG

COMMANDE DE VÉHICULE AUTONOME GUIDÉ PAR LES SCORES D'OCCUPATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.02.2024 Bulletin 2024/08**

(73) Proprietor: **Volvo Autonomous Solutions AB
405 08 Göteborg (SE)**

(72) Inventors:
• **WIBERG, Wilhelm
SE-436 39 Askim (SE)**
• **LJUNGQVIST, Oskar
SE-511 99 Sätila (SE)**

(74) Representative: **Kransell & Wennborg KB
P.O. Box 2096
403 12 Göteborg (SE)**

(56) References cited:
**US-A1- 2020 365 029 US-A1- 2021 101 624**

Remarks:
The file contains technical information submitted after
the application was filed and not included in this
specification

**Description**

**TECHNICAL FIELD**

The present disclosure relates to the field of autonomous vehicle control, especially within confined areas such as mining sites, logistics centers or ports. In particular, it discloses a method for controlling an autonomous vehicle on the basis of a world model that associates areas of a drivable surface with a probabilistic occupancy score.

**BACKGROUND**

Autonomous vehicles (AVs) in confined areas typically have a simpler sensor setup than those used on public roads, to reduce the expenditure on product cost as well as development cost. Since the environment is known to a further extent in a confined area, the foreseen obstacles that need detection can be narrowed down significantly, as opposed to public road applications where all types of physical obstacles, other traffic participants etc. need to be detected by the sensors. Thanks to the narrowing-down, sensors can be more adapted to the particular use case. Also, the applications can often be implemented with simpler algorithms for object tracking, reducing the need for more complex sensor setups. For example, in some applications it is enough to determine that an object exists in the path of the AV and to stop, whereas for a public-road use case, the object needs to be detected, classified and its intentions need to be predicted, in order to keep the productivity high. With the simpler sensor setup, a simpler representation of the data can be used, for example an occupancy grid can be used as a representation of the world surrounding the AV.

US2020225622A1, which targets a generic AV use case, discloses a method for generating a non-uniform occupancy grid map, in which the cell size depends on a distance from an object to an ego autonomous vehicle. It is argued that the precision requirements decrease further away from the autonomous vehicle, which justifies using a lower grid-cell density there. The grid size may further be adjusted based on the speed of the ego vehicle.

Further, US2022095871A1 discloses a method for operating an AV operating in a space, such as an indoor space such as a room, facility, terminal, warehouse of similar. The method assigns a weight to an object detected by an AV onboard sensor relating to how static the detected object is. When the AV has been operated in the space multiple times and the same static object has been detected, the weight can be updated (increased). It is disclosed in US2022095871 that the method may use an occupancy grid, by which the space is divided into a grid of map cells, where each cell contains an estimate of the probability that that cell is occupied by a landmark or feature. If an occupancy probability is high, that position is more trustworthy.

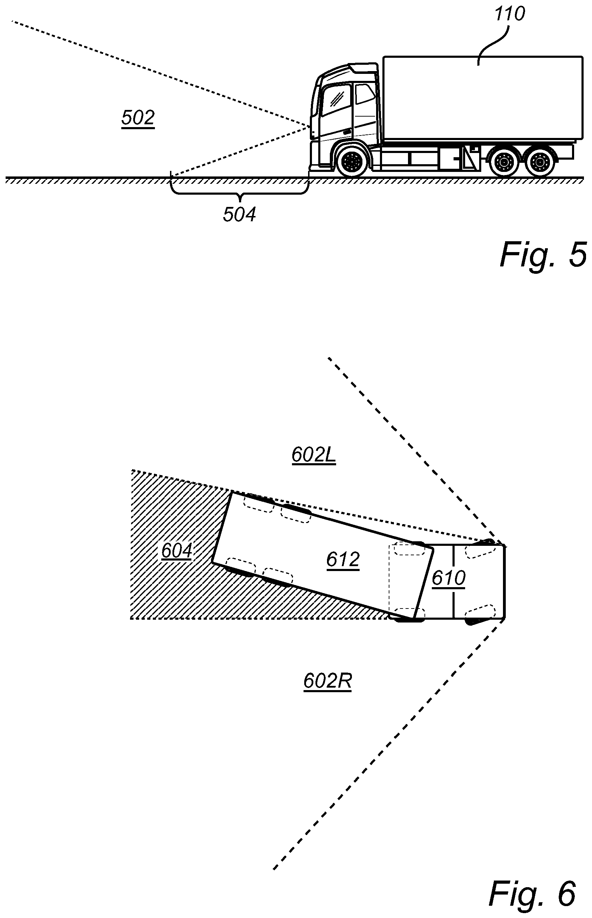

When operation of the AV is started in this or a similar technical context, all cells in the occupancy grid typically have an uncertain occupancy probability, since the sensors have not registered any hits at all. Once the sensors are up and running, the occupancy probability will be lowered for free cells and raised for occupied cells. However, this is only for cells where the sensors have coverage. In some sensor installations, e.g., the area closest to the AV (cf. area 504 in figure 5) may not be covered at all by the FOV of the sensors. This means that those cells will never be registered as free, since they are not visible for the sensors and the vehicle will not start moving until the cells are reported as free. Other scenarios where a vehiclecontrol system might have issues include when a tractor reverses with a trailer: if a sensor's FOV is obstructed rearwards, the cells just behind the vehicle combination might never be seen and may incorrectly be reported as free (cf. area 604 in figure 6). If the cells are never reported as free, the vehicle will stop reversing and the vehicle combination might block the sensors so that the cells are never able to be seen and reported as free. Further still, there may be situations where the sensors do not have FOV sufficient to continuously report the necessary cells as free, and in some cases this might lead to a deadlock where the AV is not allowed to move; and since the AV does not move, the sensors never see an unobstructed FOV.

A frequently used, though not always cost-efficient, solution may be to add sensors, so that the total FOV is extended. This may well solve the problem (except the startup deadlock issue) but adds complexity and cost. Not all confined applications are foreseen to require full sensor coverage since other mechanisms can ensure the path to be clear of obstacles, such as manual checks, site-mounted sensors, fenced-off areas, etc.

US2021101624A1 discloses a method of controlling an autonomous vehicle according to the preamble of claim 1. In relation to US2021101624A1, the present disclosure addresses the problem of improving the productivity of the controlled AV without sacrificing safety.

**SUMMARY**

One objective of the present disclosure is to make available a method and vehicle controller suitable for more efficiently controlling an AV on the basis of a world model having an occupancy score for each area of a drivable surface on which the AV can move. It is a further objective to improve the productivity of the AV thus controlled without sacrificing safety. It is a further objective to make such improvements in a case where the world model is obtained or updated based on measurement data from one or more sensors carried by the AV. It is a further objective to present measures for counteracting the deadlock scenario outlined above. It is a still further objective to provide accurate speed control for the AV and reliable estimation of the time needed to complete a driving mission.

At least some of these objectives are achieved by the present invention as defined by the independent claims. The dependent claims relate to advantageous embodiments of the invention.

In a first aspect of the invention, there is provided a method of controlling an AV with the technical features according to claim 1.

By the use of a distance-dependent threshold for determining whether grid cells are occupied, the method according to the first aspect could for instance allow the AV to move into relatively more distant cells under a relatively more lenient condition. Indeed, noise and other spurious contributions to the occupancy score will be disregarded to a greater extent if the occupancy threshold is set higher in distant cells, so that the noise and other spurious contributions to the occupancy score are less likely to exceed the occupancy threshold. The effect is achieved regardless of whether the world model has a uniform or non-uniform spatial resolution throughout the drivable surface; instead, the spatial resolution of the world model can be constant over time and need not be revised when the AV moves to a new position, which seems to be required in the prior art solution described in US2020225622A1. With the method according to the first aspect, the vehicle control function will typically see a finite free path ahead of the AV, which is shorter in regions with more uncertain cells, so that the AV's speed will be inherently limited. The proposed solution is able to account for the fact that measurements on locations more distant from the AV are typically less accurate and/or less reliable, especially if the measurements are made from the viewpoint of the AV. This effect flows from the use of different thresholds, which will limit the impact of any errors that affect the relatively more distant locations.

In some embodiments, the occupancy threshold is determined to be relatively higher if the area is relatively closer to the AV and relatively lower if the area is relatively farther from the AV. This determination presupposes knowledge of the AV's current position (e.g., relative to the world model), which must be determined unless already available. It is important to note that although the occupancy threshold is determined dynamically in view of the AV position, it is independent from the world model. The occupancy threshold can be understood as a desired safety level at a certain position relative to the AV; it typically does not represent a topographic feature (or local feature) associated with a definite location on the drivable surface.

According to the invention, where the world model is obtained and/or updated based on measurement data from one or more sensors carried by the AV, the occupancy threshold is determined to be relatively higher if the area is outside a field of view (FOV) of the sensors carried by the AV and relatively lower if the area is inside the field of view. The FOV is a simple yet efficient criterion for setting the occupancy threshold. Especially for measuring techniques relying on propagating electromagnetic or acoustic waves, it accurately distinguishes the areas where fresh measurement data is available and the areas where older measurement data has to be used. The use of older measurement data could bring a greater degree of uncertainty.

In some embodiments, the method further comprises generating a route of the AV towards a destination (in particular, up to a destination), said route passing only via such areas into which movement is enabled, and estimating a time of arrival at the destination. This embodiment improves on such prior art approaches where a time of arrival is estimated without sufficient attention given to obstacles in the driving environment and/or without considering spatial limitations of the sensorics used. Such prior art approaches may initially produce vehicle routes with too high speed, and the speed might later have to be reduced on short notice when new obstacles appear, e.g., as a result of a refresh of the world model or when more reliable measurement data becomes available. Such sudden changes could also have negative secondary effects on a vehicle fleet to which the routed vehicle belongs, more precisely, as an original plan for coordinating vehicle movements within the fleet could suddenly become obsolete and have to be made up anew. In the present embodiment, the use of a variable occupancy threshold, which increases away from the vehicle, will produce conservative velocity profiles, which are typically a more realistic basis for vehicle routing and vehicle coordination.

In a second aspect of the invention, there is provided a vehicle controller with the technical features according to claim 14.

The second aspect of the invention generally shares the effects and advantages of the first aspect, and it can be implemented with a corresponding degree of technical variation.

The invention further relates to a computer program containing instructions for causing a computer, or the vehicle controller in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

In the present disclosure, the concept of an "occupancy score" could overlap with the scope of the term *occupancy probability* in the literature, where it is sometimes defined as an estimate of the probability that that cell is occupied by a landmark or feature, or not drivable for other reasons. An occupancy score should be understood in a somewhat broader sense, to include also indicators that are not necessarily probabilistically true in a strict sense. A higher occupancy score for an area should be understood as a higher probability that the area is occupied. The condition of being occupied can refer to various aspects of the area not being possible to drive, e.g., a physical obstacle is present, the road surface is missing, the road is bumped or recessed (e.g., pothole), or is polluted (e.g., oil, grease, debris, crushed glass).

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

Aspects and embodiments are now described, by way of example, with reference to the accompanying drawings, on which:

figure 1 shows an example world model in the form of an occupancy score;

figure 2 is a flowchart of an AV control method according to embodiments herein;

figure 3 shows a vehicle controller configured to receive measurement data from sensors and, on this basis, to control movements of an AV in accordance with instructions form an operator;

figure 4 shows example AVs within the scope of applicability of the present disclosure;

figures 5 and 6 illustrate the concept of a field of view of a sensor; and

figure 7 is a top view (not drawn to scale) of an AV together with two different closeness zones.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

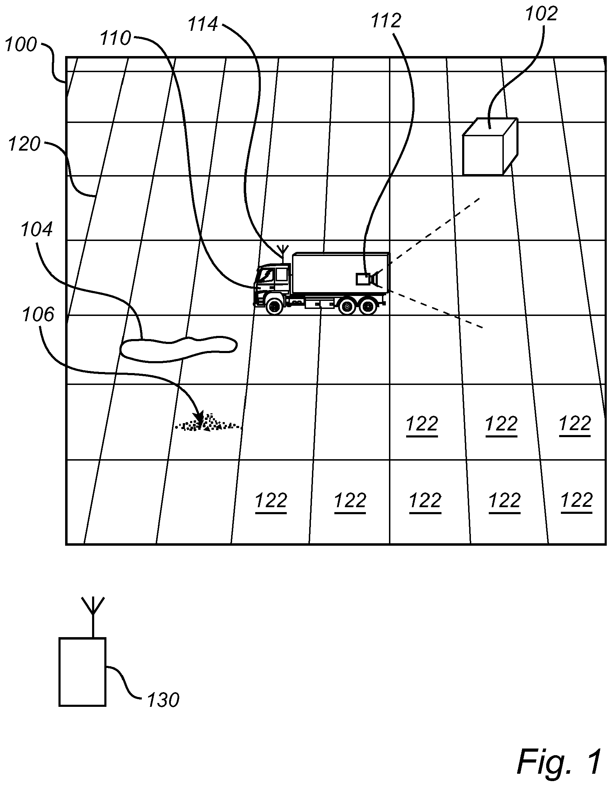

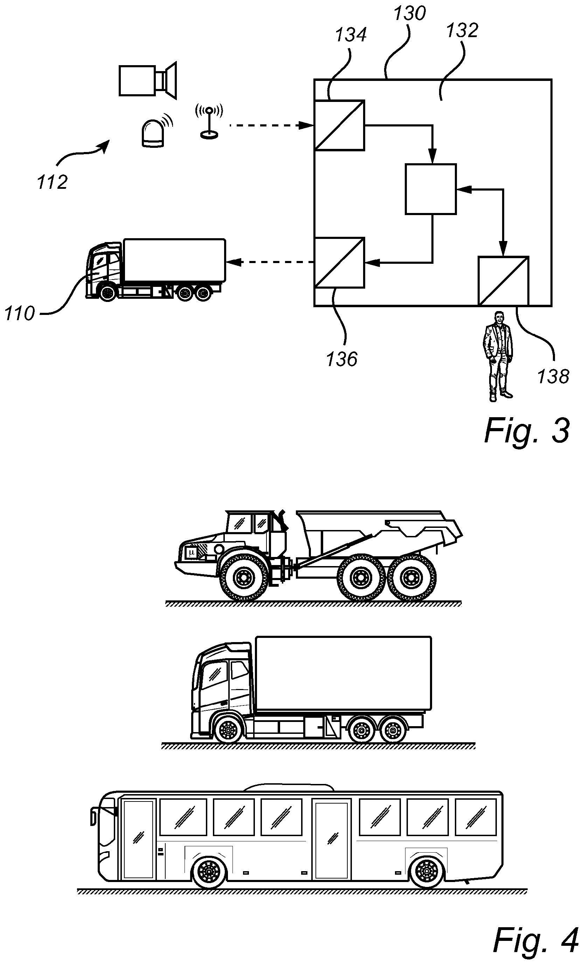

Figure 1 shows a surface 100 on which an autonomous vehicle (AV) 110 is configured to move. In typical use cases envisaged for the present disclosure, the surface 100 is a confined area, such as a mining site, logistics center or port. The AV 110 can be a car or a heavy commercial vehicle, such as a construction equipment vehicle, a one or multi-unit truck or a bus, as illustrated in figure 4. The example AV 110 in figure 1 is equipped with a sensor 112 with a limited field of view (FOV) as well as a wireless communication interface 114.

The AV 110 is assumed to be under the control of a vehicle controller 130. The vehicle controller 130 may be any programmable general-purpose computer with suitable input/output interfaces. It can be mounted in the vehicle AV 110 or be external to the AV 110. As shown in detail figure 3, the vehicle controller 130 may comprise a sensor interface 134, a control interface 136, an operator interface 138 as well as processing circuitry 132 including runtime memory and one or multiple processor cores.

The sensor interface 134 is adapted for at least receiving data from sensors 112, such as a camera, a lidar and a radio receiver. The sensors 112 may use one or more of the following measuring principles: optical, electromagnetic reflection, electromagnetic scattering, electromagnetic diffraction, lidar, color-depth sensing, millimeter-wave radar, ultra-wideband radar. For these measuring principles, which rely on rectilinear propagation of energy, a sensor's FOV can usually be accurately estimated by tracing straight lines to or from the sensor. The sensors 112 may be carried by (e.g., installed in) the AV 110 or they may be external to the AV 110. The external sensors 112 may be fixedly mounted on a building or another structure, or they may be mobile, in particular carried by other vehicles.

The control interface 136 is compatible with the communication interface 114 of the AV 110. It may be used for conveying instructions suitable for execution by actuators in the AV 110, either directly (machine-level commands) or after conversion into machine-level commands by a processor carried in the AV 110.

The operator interface 138 is configured to receive higher-level or longterm commands, such as transport missions to be carried out by the AV 110 or strategic instructions, from a human operator or from an executing software application authorized to control the AV 110.

It is seen in figure 1 that the surface 100, for purposes of vehicle control, is overlaid with an imaginary occupancy grid 120, by which the surface 100 is partitioned into cells 122. The cells 122 visible in figure 1 constitute a tiling (or tessellation) of the surface 100, and it is theoretically known that this can be achieved in several different ways. The cells 122 may have a single geometric shape or multiple different geometric shapes/sizes can be combined. To mention a few examples, the cells 122 can be polygons, such as hexagons or quadrilaterals, in particular rectangles or squares. The occupancy grid 120 can have a uniform or nonuniform spatial resolution, e.g., as measured in terms of the number of cells 122 per unit area of the surface 100. The occupancy grid 120 should cover a portion of the surface 100 where the AV 110 is expected to be moving (so as not to limit the vehicle controller's freedom to perform efficient routing of vehicles), but the occupancy grid 120 does not necessarily cover the full extent of the surface 100, e.g., it need not extend all the way to the outer limits of a logistics site or the like. The occupancy grid 120 provides an occupancy score for each cell 122. As explained above in more detail, an occupancy score can be understood as an occupancy probability - an estimate of the probability that that cell is occupied by a landmark or feature, or not drivable for other reasons - or as a generalized version of this concept. As illustrated in figure 1, the condition of being occupied can refer to various aspects of the area not being possible to drive, e.g., a physical obstacle 102 is present, the road surface is missing or has a bump or recess 104, or the area contains a pollutant 106.

Functionally, the occupancy grid is a "world model" in the sense of the present disclosure, i.e., a data structure to be used as guidance for vehicle control, including routing and vehicle coordination. Specifically, the cells of the occupancy grid constitute "areas" each associated with an occupancy score. As an alternative to an occupancy grid, sufficient information for supporting the vehicle control could be provided by a map or a map-like structure in computer-readable form, an object list, or any other suitable data structure which associates areas of the surface 110 with locally valid occupancy score values.

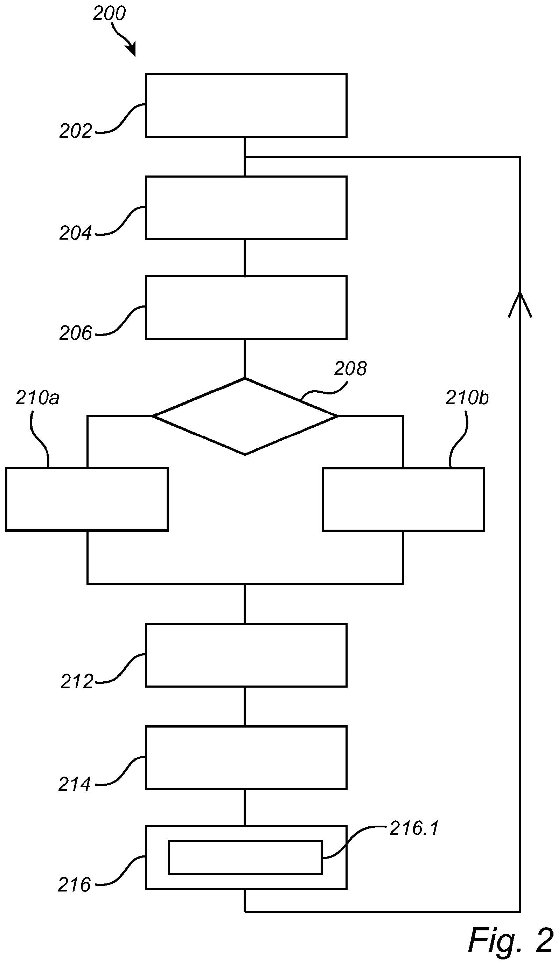

Two example embodiments of a method 200 suitable for controlling an AV of the type illustrated in figure 1 will now be described with reference to the flowchart in figure 2. The method 200 can be executed by any processor with access to a suitable world model of the surface 100 and with authority to enable and disable movement of the AV. A distributed or hybrid task allocation is also imaginable, wherein a first processor performs the enabling and disabling of movement into certain areas, and a second processor is responsible for decision-making about vehicle routing and vehicle coordination subject to these movement restrictions. The second processor may be entrusted with the feeding of the instructions to the AV 110. For purposes of illustration, it will be assumed hereinafter that the method 200 is executed by the vehicle controller 130 to control the AV 110.

In a first embodiment of the method 200, an initial step 202 includes obtaining a world model. The world model associates an occupancy score, denoted $p(m_i)$, with each area $m_i$ of the surface 100. The vehicle controller 130 can obtain the world model can be obtained by receiving a data structure representing the world model, or retrieving it from a shared memory. Alternatively, the vehicle controller 130 can obtain the world model, or update it, based on measurement data from the sensors 112. In particular, measurement data from sensors 112 in the AV 110 itself can be used to generate the world model.

In a next step 206, for at least one area $m_i$ of the surface 100, an occupancy threshold $t(m_i)$ is determined. The occupancy threshold $t(m_i)$ is determined on the basis of the position of the area $m_i$ where the occupancy threshold is to be applied. The position dependence of the occupancy threshold can be defined according to one of the following options.

In such implementations of the method 200 where the position of the AV 110 is not determined, a static division into zones of the surface 100 maybe used. One option is to define, with reference to the AV's 110 normal area of operation, one 'near' zone and one 'far' zone, wherein a relatively lower occupancy threshold is applied in the 'far' zone. It is recalled that an area with a lower occupancy threshold represents a stricter condition to fulfil in order to enable movement into the area. Another option is to define one 'well-known' and one 'not yet explored' zone, wherein a relatively lower occupancy threshold is applied in the 'not yet explored' zone. Yet another option is to define one 'low-risk' and one 'high-risk' zone, e.g. based on the presence of vulnerable road users, sensitive equipment or the like, wherein a relatively lower occupancy threshold is applied in the 'high-risk' zone.

In such implementations of the method 200, where a position or orientation of one of the sensors 112 is determined, a dynamic division into zones of the surface 100 dependent on the sensor position/orientation may be used. For example, a FOV of said one of the sensors 112 can be determined in relation to the surface 100. The FOV may correspond to those areas on the surface 110 from which straight lines can impinge on an aperture of the sensor 112. Geometrically, said areas can be determined by an inverse approach, namely, by projecting a solid angle corresponding to the sensor's 112 aperture and collocated with the sensor 112 onto the surface 110. The projection thus obtained can then be converted into a set of areas based on a conversion rule, e.g., that an area $m_i$ shall be included in the set of areas if at least 50% or at least 75% or some other percentage overlaps with the projection. Regardless of the method by which the FOV is determined, the FOV can be defined to be one zone of the surface 100 where the occupancy threshold is relatively lower (corresponding to a more lenient condition on movement), whereas the complement, outside the FOV, is defined as a zone where the occupancy threshold is relatively higher (corresponding to a stricter condition on movement).

Figure 5 illustrates a further example FOV configuration, namely, where a forward-facing sensor, e.g., a video camera, is frontally mounted on the AV 110, a nonzero distance above ground level. The FOV 502 can be described as an approximate horizontal cone, which has a semi-annular projection on the surface 100. A semicircular area 504 immediately in front of the AV 110 is hidden from the sensor. This illustrates that the property of being inside or outside the FOV does not necessarily correspond to being near or far from the AV 110. If it is of primary importance to avoid the deadlocking scenario outlined initially, the occupancy threshold based on nearness criterion rather than a FOV criterion. Manual checks, data site-mounted sensors, the presence of fenced-off areas can be relied upon to ensure a desired safety level.

Figure 6 is a top view of a combination vehicle composed of a tractor 610 and a trailer 612. The tractor 610 is equipped with backward-facing sensors. Because of the relative yaw movability of the trailer 612, the FOV of the backward-facing sensors is here dependent on the articulation angle. More precisely, the FOV will have one left-hand component 602L and one right-hand component 602R, whereas the hashed area 604 behind the tractor 610 is outside the FOV. The large sector to the right of the dashed lines is always outside the FOV. Vehicle-carried devices for sensing or estimating the articulation angle while the vehicle is operating are known in the art, and they can provide sufficient input to compute the FOV when necessary.

It is important to note, for each of these static and dynamic options, that the determination 206 of the occupancy threshold $t(m_i)$ in no way interferes - let alone modifies - the data of the world model data. The occupancy threshold is independent from the world model, and independent from the occupancy scores $p(m_i)$ in particular.

With reference to the flowchart in figure 2, next, it is assessed 208 for at least one area $m_i$ whether the occupancy score is less than the determined occupancy threshold, that is, whether

$$p(m_i) < t(m_i).$$

If the inequality is true, then movement of the AV 110 into the area $m_i$ is enabled 210a. Otherwise, if it is found that

$$p(m_i) \geq t(m_i),$$

then movement of the AV 110 into the area $m_i$ is disabled 210b.

The occupancy threshold determination 206 and assessment 208 maybe repeated as desired for sufficiently many areas $m_i$ to cover a region of interest of the surface 100. For example, the region of interest may be the region currently under consideration for route planning. Alternatively, the region of interest may be a corridor extending from the AV 110 to a next destination assigned by a transport mission that is in progress; the width of the corridor can be chosen based on earlier runs, e.g., the smallest width that has been found to allow efficient route planning in normal circumstances.

The decision to enable 210a or disable 210b movement may remain in force until the assessing step 208 is repeated. The assessing step 208 can be repeated in response to an updating of the world model and/or an updating of the occupancy thresholds. To repeat the assessing step 208 in these cases, it may or may not be necessary to execute all of the preceding steps anew.

In a second embodiment, the method 200 comprises a further step 204 in which a current position of the AV 110 is determined. The position may be determined based on data from a global navigation satellite system (GNSS) receiver, cellular-network positioning, inertial measurements, an optical or radio-frequency (RF) fiducial deployed at a known reference location, or the like. Using the current position of the AV 110, it is possible to define a dynamic division of the surface 100 into two or more zones.

A simple option is to split the surface 100 into two zones $M_{far}$, $M_{near}$ and to define the occupancy threshold as follows:

$$t(m_i) = \begin{cases} t_1, & m_i \in M_{far}, \\ t_2, & m_i \in M_{near}, \end{cases}$$

where the constants $t_1$, $t_2$ satisfy $t_1 < t_2$. The near zone $M_{near}$ may be defined as all points on the surface 100 which are closer than a predefined distance to a reference point on the AV 110, such as an approximate center, or a driver position. Alternatively, the near zone $M_{near}$ may be defined as all points on the surface 100 which are closer than a predefined distance to a nearest point on an approximate horizontal contour of the AV 110. The horizontal contour may alternatively be described as the ground projection of the AV 110. Ways of converting such point sets into equivalent sets of areas $m_i$ in the world model have been suggested above in connection with sensor FOVs.

A somewhat more complex option is to divide the surface 100 into three or more zones $M_1$, $M_2$, $M_3$, .... The zones may be concentric on a reference point on the AV 100, and they may have a circular-annular shape or a shape approximating the horizontal contour of the AV 110. In the case of three zones, the occupancy threshold can be defined as follows:

$$t(m_i) = \begin{cases} t_1, & m_i \in M_1, \\ t_2, & m_i \in M_2, \\ t_3, & m_i \in M_3, \end{cases}$$

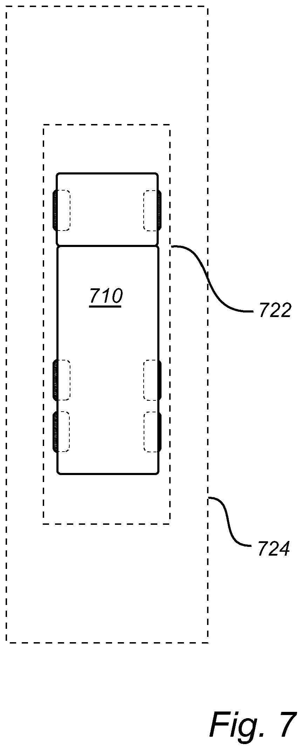

where $t_1 < t_2 < t_3$ and $M_1$ represents the farthest, $M_2$ the intermediate and $M_3$ the nearest zone. A variation is illustrated in figure 7, where three zones are delimited by two contours 722, 724 following (i.e., moving with) the vehicle 710. Here, zone $M_1$ is defined as the points outside the outer contour 724, zone $M_2$ is defined as the points between the inner and outer contours 722, 724, and zone $M_3$ is defined as the points inside the inner contour 722. The contours 722, 724 are approximately rectangular. It is noted that the shapes of the contours 722, 724 do not coincide with the horizontal contour of the AV 110 itself, but has been purposefully elongated in the main direction of movement, i.e., the longitudinal direction. In a further variation, the contours 722, 724 can be made asymmetric in the longitudinal direction, in the sense that they project further from the AV 110 in the forward direction (+*x*) than in the reverse direction (-*x*). It can be expected in many use cases that AVs are more maneuverable in the forward direction, including avoidance maneuvers, and have more refined sensorics towards that direction, so that a less restrictive movementenable criterion is acceptable; this is reflected by the shape of each contour 722, 724.

A still further option is to define the occupancy threshold continuously, as per:

$$t(m_i) = \phi\big(d(m_i, X_{110})\big),$$

where *d* is a distance function, $X_{110}$ denotes the position of the AV 110, and $\phi$ is a nonincreasing function. For example, one may use $\phi(s) = min\{t_0, 1/s\}$, where $t_0$ is a preset maximum occupancy threshold to be applied.

In each of the first and second embodiments, the method 200 may include one or more of the following optional steps after the enabling 210a or disabling 210b of movement into areas $m_i$ of the surface 100.

In one optional step 212 of the method 200, the speed of the AV 110 is controlled such that the AV 110 is at least one stopping distance away from any areas $m_i$ into which movement is disabled. It is known that the stopping distance is a (generally superlinear) function of speed, which may have a further dependence on road conditions. The criterion of having at least one stopping distance away from any areas $m_i$ into which movement is disabled may be relaxed so that it applies only for areas $m_i$ ahead of the AV 110, e.g., areas $m_i$ belonging to a frontal halfplane relative to the AV 110.

In another optional step 214, a route of the AV 110 towards a destination is generated, wherein the route passes only via such areas into which movement has been enabled 210a. Further a time of arrival at the destination is estimated. The estimation may take into account a velocity profile of the route; the velocity profile may observe one of the criteria stated in step 212.

In a further optional step 216, the current position of the AV 110 is determined and the occupancy threshold *t*) is updated. The execution of step 216 may end after the current position of the AV 110 has been determined and found to differ by less than a predefined threshold distance from the previous position of the AV 110; in this case the new occupancy threshold *t*) may be set equal to the previous occupancy threshold *t*).

In a further development of step 216, the updating of the occupancy threshold *t*) takes into account a current orientation of the AV 110. The orientation may for example affect the FOV of a vehicle-carried sensor 112 relative to the surface 110. Further, a change of AV orientation may further lead to a corresponding change in the orientation of a contour that moves with the AV 110, such as one of the contours 722, 724 illustrated in figure 7.

The present disclosure has proposed various ways of safeguarding a desired deterministic behavior of an AV that could also circumvents issues with possible blind spots of the sensor setup. It does so without strict requirements as to how a world model shall be represented, but rather uses an interpretation of the uncertainties inherent to the representation so as to combine a pessimistic behavior (which, in isolation, could lead to low productivity) with an optimistic behavior (which, in isolation, might produce an unsafe system). The invention reaps the benefits of these two behaviors into a balanced model where the interpretation of the world model - and thus the behavior of the ego vehicle - is be made dependent on the closeness to the ego vehicle. As seen in some embodiments, a pessimistic behavior is applied close to the ego vehicle, whereas further away a more optimistic behavior is configured. This leads to higher productivity while maintaining a safety-oriented pessimism in respect of areas close to the ego vehicle.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1. A method (200) of controlling an autonomous vehicle, AV (110), which is movable on a surface (100), the method comprising:

    obtaining (202) a world model (120) of the surface, by which each area (122) of the surface is associated with a probabilistic occupancy score, wherein the world model is obtained and/or updated based on measurement data from one or more sensors (112) carried by the AV; determining (206) an occupancy threshold to be applied to an area (122) of the surface; enabling (210a) movement of the AV into the area if the associated occupancy score is less than the determined occupancy threshold; and otherwise disabling (210b) movement into the area, **characterized by** determining the occupancy threshold on the basis of the area's position, wherein the occupancy threshold is determined to be relatively higher if the area is outside a field of view of the one or more sensors carried by the AV and relatively lower if the area is inside the field of view.

**2.** The method of claim 1, further comprising:

> determining (204) a position of the AV, wherein the occupancy threshold is determined (206) to be relatively higher if the area is relatively closer to the AV and relatively lower if the area is relatively farther from the AV.

**3.** The method of claim 2, wherein the closeness of the area is measured relative to an approximate center of the AV.

**4.** The method of claim 2, wherein the closeness of the area is measured relative to an approximate horizontal contour of the AV.

**5.** The method of claim 2, wherein the closeness of the area is measured relative to an approximately rectangular shape aligned and moving with the AV.

**6.** The method of any of the preceding claims, wherein the world model is a data structure to be used as guidance for vehicle control, including routing and vehicle coordination.

**7.** The method of any of the preceding claims, wherein the one or more sensors apply at least one of the following measuring principles: optical, electromagnetic reflection, electromagnetic scattering, electromagnetic diffraction, lidar, color-depth sensing, millimeter-wave radar, ultra-wideband radar.

**8.** The method of any of the preceding claims, further comprising:
updating (216) the occupancy threshold in accordance with a current position of the AV.

**9.** The method of claim 8, further comprising:
updating (216.1) the occupancy threshold in accordance with a current orientation of the AV.

**10.** The method of any of the preceding claims, further comprising:
controlling (212) a speed of the AV such that the AV is at least one stopping distance away from any areas into which movement is disabled.

**11.** The method of any of the preceding claims, further comprising:
generating (214) a route of the AV towards a destination, said route passing only via such areas into which movement is enabled (210a), and estimating a time of arrival at the destination.

**12.** The method of any of the preceding claims, wherein the world model includes an occupancy grid with a plurality of cells representing a partition of the surface into areas.

**13.** The method of claim 12, wherein the occupancy grid has a uniform spatial resolution.

**14.** A vehicle controller (130) configured to control at least one autonomous vehicle, AV (110), which is movable on a surface (100), wherein the autonomous vehicle is controlled on the basis of a world model (120) of the surface, by which each area (122) of the surface is associated with a probabilistic occupancy score, wherein the world model is obtained and/or updated based on measurement data from one or more sensors (112) carried by the AV, the vehicle controller comprising processing circuitry (132) configured to:

> determine an occupancy threshold to be applied to an area (102) of the surface;
> enable movement of the AV into the area if the associated occupancy score is less than the determined occupancy threshold; and
> otherwise disable movement into the area, **characterized in that** the processing circuitry (132) is configured to determine the occupancy threshold on the basis of the area's position, wherein the occupancy threshold is determined to be relatively higher if the area is outside a field of view of the one or more sensors carried by the AV and relatively lower if the area is inside the field of view.

**15.** A computer program comprising instructions to cause the vehicle controller of claim 14 to execute the steps of the method of any of claims 1 to 13.

**Patentansprüche**

**1.** Verfahren (200) zum Steuern eines autonomen Fahrzeugs, AV (110), das auf einer Oberfläche (100) beweglich ist, das Verfahren umfassend:

> Erhalten (202) eines Weltmodells (120) der Oberfläche, durch das jeder Bereich (122) der Oberfläche einem probabilistischen Belegungswert zugeordnet ist, wobei das Weltmodell auf der Grundlage von Messdaten von einem oder mehreren Sensoren (112), die von dem AV getragen werden, erhalten und/oder aktualisiert wird;
> Bestimmen (206) einer Belegungsschwelle, die auf einen Bereich (122) der Oberfläche anzuwenden ist;
> Ermöglichen (210a) der Bewegung des AV in den Bereich, wenn der zugeordnete Belegungswert kleiner als die bestimmte Belegungsschwelle ist; und
> die Bewegung in den Bereich anderweitig zu unterbinden (210b) ,

**dadurch gekennzeichnet, dass** die Belegungsschwelle auf der Grundlage der Position des Bereichs bestimmt wird, wobei die Belegungsschwelle so bestimmt wird, dass sie relativ höher ist, wenn der Bereich außerhalb eines Sichtfelds des einen oder der mehreren von dem AV getragenen Sensoren liegt, und relativ niedriger, wenn der Bereich innerhalb des Sichtfelds liegt.

2. Verfahren nach Anspruch 1, ferner umfassend:

   Bestimmen (204) einer Position des AV, wobei die Belegungsschwelle so bestimmt wird (206), dass sie relativ höher ist, wenn der Bereich relativ näher am AV liegt, und relativ niedriger, wenn der Bereich relativ weiter vom AV entfernt ist.

3. Verfahren nach Anspruch 2, wobei die Nähe des Bereichs relativ zu einem ungefähren Mittelpunkt des AV gemessen wird.

4. Verfahren nach Anspruch 2, wobei die Nähe des Bereichs relativ zu einer ungefähren horizontalen Kontur des AV gemessen wird.

5. Verfahren nach Anspruch 2, wobei die Nähe des Bereichs relativ zu einer annähernd rechteckigen Form gemessen wird, die mit dem AV ausgerichtet ist und sich mit diesem bewegt.

6. Verfahren nach einem der vorhergehenden Ansprüche, wobei das Weltmodell eine Datenstruktur ist, die als Führung für die Fahrzeugsteuerung, einschließlich der Streckenführung und der Fahrzeugkoordination, verwendet wird.

7. Das Verfahren nach einem der vorhergehenden Ansprüche, wobei der eine oder die mehreren Sensoren mindestens eines der folgenden Messprinzipien anwenden: optische, elektromagnetische Reflexion, elektromagnetische Streuung, elektromagnetische Beugung, Lidar, Farbtiefenmessung, Millimeterwellenradar, Ultrabreitbandradar.

8. Verfahren nach einem der vorhergehenden Ansprüche, ferner umfassend:
   Aktualisieren (216) der Belegungsschwelle in Übereinstimmung mit einer aktuellen Position des AV.

9. Verfahren nach Anspruch 8, ferner umfassend:
   Aktualisieren (216.1) der Belegungsschwelle in Abhängigkeit von einer aktuellen Ausrichtung des AV.

10. Verfahren nach einem der vorhergehenden Ansprüche, ferner umfassend:
    Steuern (212) einer Geschwindigkeit des AV, so dass das AV mindestens einen Bremsweg von allen Bereichen entfernt ist, in die die Bewegung deaktiviert ist.

11. Verfahren nach einem der vorhergehenden Ansprüche, ferner umfassend:
    Erzeugen (214) einer Route des AV in Richtung eines Ziels, wobei die Route nur über solche Bereiche führt, in die die Bewegung freigegeben ist (210a) , und Schätzen einer Ankunftszeit am Zielort.

12. Verfahren nach einem der vorhergehenden Ansprüche, wobei das Weltmodell einen Belegungsraster mit mehreren Zellen aufweist, die eine Aufteilung der Oberfläche in Bereiche darstellen.

13. Verfahren nach Anspruch 12, wobei das Belegungsraster eine einheitliche räumliche Auflösung aufweist.

14. Fahrzeugsteuerung (130), die so konfiguriert ist, dass sie mindestens ein autonomes Fahrzeug, AV (110), steuert, das auf einer Oberfläche (100) beweglich ist, wobei das autonome Fahrzeug auf der Grundlage eines Weltmodells (120) der Oberfläche gesteuert wird, durch das jeder Bereich (122) der Oberfläche einem probabilistischen Belegungswert zugeordnet ist, wobei das Weltmodell auf der Grundlage von Messdaten von einem oder mehreren Sensoren (112), die von dem AV getragen werden, erhalten und/oder aktualisiert wird, die Fahrzeugsteuerung umfassend eine Verarbeitungsschaltung (132), die konfiguriert ist, zum:

    Bestimmen einer Belegungsschwelle, die auf einen Bereich (102) der Oberfläche anzuwenden ist;
    Ermöglichen der Bewegung des AV in den Bereich, wenn der zugeordnete Belegungswert kleiner als die bestimmte Belegungsschwelle ist; und
    sonst Bewegung in den Bereich zu deaktivieren, **dadurch gekennzeichnet, dass** die Verarbeitungsschaltung (132) konfiguriert ist, um die Belegungsschwelle auf der Grundlage der Position des Bereichs zu bestimmen, wobei die Belegungsschwelle so bestimmt wird, dass sie relativ höher ist, wenn der Bereich außerhalb eines Sichtfelds des einen oder der mehreren von dem AV getragenen Sensoren liegt, und relativ niedriger, wenn der Bereich innerhalb des Sichtfelds liegt.

15. Computerprogramm mit Anweisungen, die die Fahrzeugsteuerung nach Anspruch 14 veranlassen, die Schritte des Verfahrens nach einem der Ansprüche 1 bis 13 auszuführen.

## Revendications

1. Procédé (200) de commande d'un véhicule autonome AV (110) qui est mobile sur une surface (100), ce procédé comprenant :

   l'obtention (202) d'un modèle universel (120) de la surface, par lequel chaque zone (122) de la surface est associée à un score d'occupation probable, le modèle universel étant obtenu et/ou mis à jour en se basant sur des données de mesure d'un ou plusieurs capteurs (112) portés par l'AV ;
   la détermination (206) d'un seuil d'occupation à appliquer à une zone (122) de la surface ;
   l'autorisation (210a) du mouvement de l'AV dans la zone si le score d'occupation associé est inférieur au seuil d'occupation déterminé ; et autrement, la désactivation (210b) du mouvement dans la zone,
   **caractérisé par** la détermination du seuil d'occupation sur la base de la position de la zone, le seuil d'occupation étant déterminé de manière à être relativement plus élevé si la zone est à l'extérieur d'un champ de vision du ou des plusieurs capteurs portés par l'AV et relativement faible si la zone se trouve dans le champ de vision.

2. Procédé selon la revendication 1, comprenant en outre :

   la détermination (204) d'une position de l'AV ,
   le seuil d'occupation étant déterminé (206) de manière à être relativement plus élevé si la zone est relativement proche de l'AV et relativement faible si la zone est relativement éloignée de l'AV.

3. Procédé selon la revendication 2, dans lequel la proximité de la zone est mesurée par rapport à un centre approximatif de l'AV.

4. Procédé selon la revendication 2, dans lequel la proximité de la zone est mesurée par rapport à un contour horizontal approximatif de l'AV.

5. Procédé selon la revendication 2, dans lequel la proximité de la zone est mesurée par rapport à une forme approximativement rectangulaire alignée et se déplaçant avec l'AV.

6. Procédé selon l'une quelconque des revendications précédentes, dans lequel le modèle universel est une structure de données à utiliser comme guide pour la commande de véhicule, incluant le routage et la coordination du véhicule.

7. Procédé selon l'une quelconque des revendications précédentes, dans lequel le ou les plusieurs capteurs appliquent au moins un des principes de mesure suivants : réflexion optique, électromagnétique, dispersion électromagnétique, diffraction électromagnétique, lidar, captage de profondeur de couleur, radar à ondes millimétriques, radar à bande ultralarge.

8. Procédé selon l'une quelconque des revendications précédentes, comprenant en outre :
   la mise à jour (216) du seuil d'occupation en fonction d'une position actuelle de l'AV.

9. Procédé selon la revendication 8, comprenant en outre :
   la mise à jour (216.1) du seuil d'occupation en fonction d'une orientation actuelle de l'AV.

10. Procédé selon l'une quelconque des revendications précédentes, comprenant en outre :
    la commande (212) d'une vitesse de l'AV de manière à ce que l'AV se trouve à au moins une distance d'arrêt de toutes les zones dans lesquelles le mouvement est désactivé.

11. Procédé selon l'une quelconque des revendications précédentes, comprenant en outre :
    la génération (214) d'un itinéraire de l'AV vers une destination, ledit itinéraire passant seulement via les zones dans lesquelles le mouvement est autorisé (210a), et estimant une heure d'arrivée à la destination.

12. Procédé selon l'une quelconque des revendications précédentes, dans lequel le modèle universel inclut une grille d'occupation avec une pluralité de cellules représentant une division de la surface en zones.

13. Procédé selon la revendication 12, dans lequel la grille d'occupation a une définition spatiale uniforme.

14. Commande de véhicule (130) configurée pour commander au moins un véhicule autonome (110) qui est mobile sur une surface (100), le véhicule autonome étant commandé sur la base d'un modèle universel (120) de la surface, par lequel chaque zone (122) de la surface est associée à un score d'occupation probable, le modèle universel étant obtenu et/mis à jour en se basant sur des données de mesure d'un ou plusieurs capteurs (112) portés par l'AV, la commande de véhicule comprenant des circuits de traitement (132) configurés pour :

    déterminer un seuil d'occupation à appliquer à une zone (102) de la surface ;
    permettre le mouvement de l'AV dans la zone si le score d'occupation associé est inférieur au seuil d'occupation déterminé un ; et autrement, désactiver le mouvement dans la zone,

**caractérisé en ce que** les circuits de traitement (132) sont configurés pour déterminer le seuil d'occupation sur la base de la position de la zone, le seuil d'occupation étant déterminé de manière à être relativement plus élevé si la zone est à l'extérieur d'un champ de vision du ou des plusieurs capteurs portés par l'AV et relativement faible si la zone est à l'intérieur du champ de vision.

15. Programme informatique comprenant des instructions pour amener la commande de véhicule de la revendication 14 à exécuter les étapes du procédé selon l'une quelconque des revendications 1 à 13.

Fig. 1

*Fig. 2*

**Fig. 3**

**Fig. 4**

*Fig. 5*

*Fig. 6*

710

722

724

Fig. 7

**REFERENCES CITED IN THE DESCRIPTION**

**Patent documents cited in the description**

- US 2020225622 A1
- US 2022095871 A1
- US 2022095871 A
- US 2021101624 A1